# EUROPÄISCHE PATENTSCHRIFT

(11) **EP 1 487 632 B1**
(45) Veröffentlichungstag und Bekanntmachung des Hinweises auf die Patenterteilung: **18.08.2010**
(21) Anmeldenummer: 03744364.5
(22) Anmeldetag: 14.03.2003
(51) Int. Cl.: B29D 12/00, B29C 45/00, B60N 2/46

(54) **VERFORMBARES BAUTEIL, INSBESONDERE AUSSTATTUNGSTEIL FÜR EIN KRAFTFAHRZEUG, UND VERFAHREN ZU SEINER HERSTELLUNG**
DEFORMABLE COMPONENT, IN PARTICULAR FITTING FOR A MOTOR VEHICLE AND METHOD FOR PRODUCING THE SAME
PIECE DEFORMABLE, NOTAMMENT ELEMENT D'EQUIPEMENT POUR VEHICULE A MOTEUR, ET PROCEDE DE FABRICATION ASSOCIE

(30) Priorität: 15.03.2002 DE 10211656
(43) Veröffentlichungstag der Anmeldung: 22.12.2004
(73) Patentinhaber: Johnson Controls Interiors GmbH & Co. KG, 42285 Wuppertal (DE)
(72) Erfinder: WOLFF, Martin, 45529 Hattingen (DE); BUDDE, Birgit, 42857 Remscheid (DE); BRUNS, Otwald, 42281 Wuppertal (DE); BRÜCKNER, Hubert, 40699 Erkrath (DE)
(74) Vertreter: Hemmelmann, Klaus
(86) Internationale Anmeldenummer: PCT/EP2003/002695
(87) Internationale Veröffentlichungsnummer: WO 2003/078149

(56) Entgegenhaltungen:
- DE-A- 2 434 768
- DE-A- 19 752 786
- US-A- 5 244 251
- US-A- 5 348 369
- US-B1- 6 343 839

## Beschreibung

Die Erfindung betrifft ein Ausstattungsteil für den Innenraum eines Kraftfahrzeugs, aus einer ersten, hartelastischen oder plastisch verformbaren Trägerstruktur und einer mit dieser einstückig verbundenen zweiten, weichelastischen Komponente, welche die mit Ausnehmungen versehene Trägerstruktur dichtend verschließt, sowie ein Verfahren zur Herstellung eines derartigen Bauteils, bei dem die mit Ausnehmungen versehene hartelastische oder plastisch verformbare Trägerstruktur bevorzugt durch Spritzgießen ausgeformt wird.

### Stand der Technik

Aus der Offenlegungsschrift DE 197 52 786 A1 sind ein gattungsgemäßes Bauteil und Verfahren bekannt. Das als Ablagefach für ein Kraftfahrzeug ausgebildete Bauteil besteht aus einem wannenartigen Innenteil aus einem weichen Kunststoff, beispielsweise aus einem thermoplastischen Elastomer, das von einer stoffschlüssig mit dem Innenteil verbundenen harten Außenschale umgeben ist. In die Außenschale sind U-förmige Ausnehmungen eingelassen, die mit Rastvorsprüngen versehene, hartelastisch federnde Rastzungen ausbilden. Von der Innenseite des Ablagefachs her sind die Ausnehmungen vollständig durch das wannenartige Innenteil verdeckt. Eine Biegeverformung der Rastzunge bewirkt eine Verwölbung des Innenteils, die durch die Verwendung eines weichelastischen Werkstoffs keine mechanischen Beschädigungen zur Folge hat.

Bei der Herstellung eines derartigen Bauteils wird in einer Spritzgießform zuerst das Innenteil in einer gegenüber der Sollkontur um die Wanddicke der Hartkomponente verkleinerten Kavität auf einen Formkern aufgeformt. Anschließend wird der Formkern mit dem aufgeformten weichen Innenteil in das Formnest einer vergrößerten Gießform eingesetzt. Bei geschlossenem Werkzeug kann nun der zwischen Innenteil und Formnest verbleibende Spalt mit dem harten Kunststoff ausgefüllt werden.

Dieses Vorgehen hat grundsätzlich den Nachteil, dass ein erheblicher Werkstoffeinsatz der vergleichsweise teuren Weichkomponente erforderlich ist. Es eignet sich daher nur für Bauteile, bei denen die Innenschale zur Verbesserung der Haptik vollflächig mit einer weichen Wanne auszukleiden ist.

Im gleichen Dokument wird ein vorbekanntes Verfahren beschrieben, bei dem ein derartiges Ablagefach durch Spritzgießen der äußeren harten Wanne gefertigt wird. Nach dem Ausziehen des Formkerns werden ein anderer Formkern kleineren Querschnitts in das Wanneninnere eingeführt und der entstehende Spalt mit der Weichkomponente ausgefüllt. Dabei ist nach Auffassung des Anmelders unbedingt zu vermeiden, dass weiches Kunststoffmaterial in freigelegte Rastkonturen der Hartschale einläuft.

### Aufgabe

Der Erfindung liegt die Aufgabe zugrunde, ein gedichtetes Ausstattungsteil für den Innenraum eines Kraftfahrzeugs bereitzustellen, welches verformbare Trägerstrukturen mit einer ausreichenden Grundsteifigkeit besitzt, aber dennoch bei einem Unfall, beispielsweise einem seitlichen Aufprall, ein günstiges Verformungsverhalten aufweist. Ferner soll es sich mit einem relativ geringen Anteil an weichelastischer Werkstoffkomponente mittels eines einfachen und prozesssicheren Verfahrens fertigen lassen.

### Lösung

Die Aufgabe wird erfindungsgemäß dadurch gelöst, dass die Ausnehmungen des Bauteils durch die weichelastische Komponente im Wesentlichen ausgefüllt und damit dichtend verschlossen sind.

Die hartelastische Trägerstruktur kann dabei nach einer bevorzugten Ausführungsform U-förmige Ausnehmungen aufweisen, die in die Trägerstruktur eingeformte Rastzungen ausbilden und beispielsweise zur lösbaren Befestigung des Bauteils in einem Gesamtsystem dienen. Dabei wird die örtliche Wanddicke der die Ausnehmung dichtend ausfüllenden weichelastischen Komponente vorzugsweise geringer, insbesondere um mindestens die Hälfte niedriger ist als die örtliche Breite der betreffenden Ausnehmung ausgebildet. Auf diese Weise ist die weichelastische Füllung der Ausnehmung ausreichend verformbar, so dass die zum Einfügen der Rastzungen erforderlichen Verwölbungen schadensfrei und unter geringem Kraftaufwand vorgenommen werden können.

Nach einer anderen bevorzugten Ausführungsform der Erfindung ist die hartelastische oder plastisch verformbare Trägerstruktur gitterartig ausgebildet, wobei die zwischen den Gitterelementen ausgebildeten flächigen Ausnehmungen durch die weichelastische Komponente im Wesentlichen ausgefüllt und damit dichtend verschlossen sind. Ein derartiges Bauteil weist zwar eine ausreichende Grundsteifigkeit auf, kann sich jedoch bei seitlichem Aufprall plastisch verformen, ohne dass eine unerwünscht hohe Verformungskraft aufzuwenden ist.

Der dichtende Verschluß durch die weichelastische Komponente ermöglicht ferner das Aufbringen einer die hartelastische oder plastisch verformbare Trägerstruktur und den die Ausnehmungen dichtend ausfüllenden weichelastischen Anteil einseitig bedeckenden Schaumlage, insbesondere aus einem PUR-Schaum, ohne dass bei der Fertigung besondere Maßnahmen zum Verschluß der Ausnehmungen während des Schäumvorgangs vorzunehmen sind. In diesem speziellen Fall kann es jedoch angebracht sein, die Trägerstruktur wie im zitierten Stand der Technik innen- oder außenseitig zur Abdichtung ganz oder zumindest im Bereich der Ausnehmungen mit der weichelastischen Komponente zu überziehen. Nach einer weiteren Ausbildung der Erfindung kann dabei mit Vorteil vorgesehen werden, dass die Schaumlage an ihrem seitlichen, der Trägerstruktur zugewandten Anlage vollumfänglich von einem einstückig an die Trägerstruktur angeformten Dichtwulst aus weichelastischem Werkstoff umgeben ist. Der Dichtwulst dichtet die Trägerstruktur im Schäumwerkzeug seitlich ab, so dass der Schaum nicht aus der Werkzeugkavität austreten kann.

Nach außen kann der Schaum zusätzlich mit einem flächigem Dekormaterial, insbesondere einer Kunststofffolie, einem Gewebe oder einem Leder kaschiert werden.

Das erfindungsgemäße Verfahren zur Herstellung des Bauteils ist **dadurch gekennzeichnet, dass** die Ausnehmungen nachfolgend durch Einspritzen einer weichelastischen Komponente dichtend ausgefüllt werden.

Nach einer besonderen Weiterbildung des Verfahrens kann dabei zeitgleich mit dem Einspritzen der weichelastischen Komponente in die Ausnehmungen oder zeitversetzt zu diesem Vorgang ein bevorzugt umlaufender Dichtwulst aus weichelastischer Komponente an die Trägerstruktur angeformt werden. Nachfolgend kann die Trägerstruktur in ein Schäumwerkzeug eingelegt und zumindest einseitig mit einer Schaumlage versehen werden. In einem weiteren Verfahrensschritt kann vorgesehen werden, dass vor dem Schäumen ein flächiges Dekormaterial in das Schäumwerkzeug eingelegt und nachfolgend die Schaumlage in den Raum zwischen Dekormaterial und Trägerstruktur eingebracht wird. Alternativ kann auf die Schaumlage im Anschluß an den Schäumprozess ein flächiges Dekormaterial aufkaschiert, insbesondere aufgeklebt werden.

### Figuren

Die Figuren stellen beispielhaft und schematisch eine Ausführung der Erfindung dar.

Es zeigen:
- Fig. 1: eine erfindungsgemäß gestaltete Armauflage für eine Mittelkonsole in Aufsicht
- Fig. 2: die Armauflage nach Fig. 1 im Schnitt A-A
- Fig. 3: die Armauflage nach Fig. 1 im Schnitt B-B
- Fig. 4: einen Ausschnitt einer seitlichen Ansicht auf die Armauflage nach Fig. 3 aus Richtung X

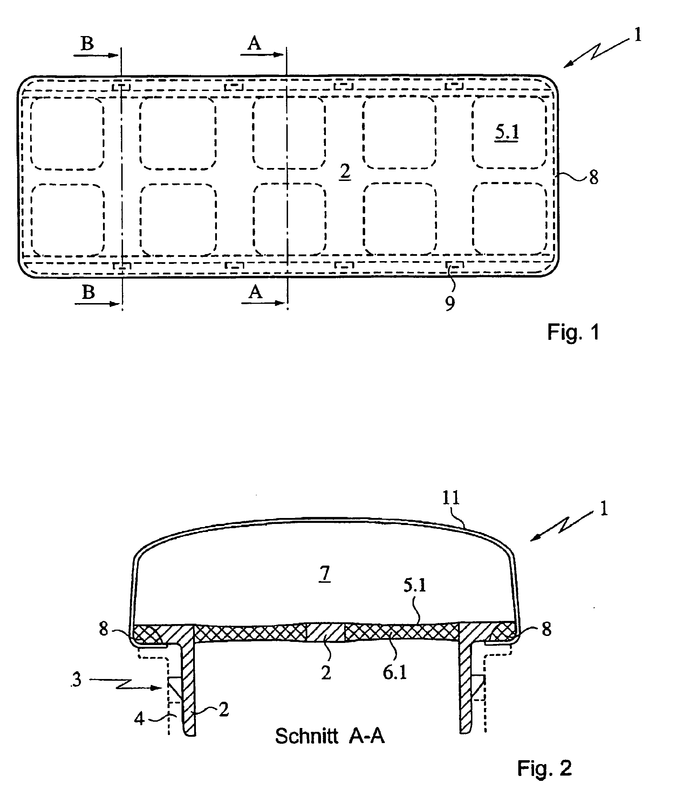

Die in den Figuren dargestellte Armauflage 1 besteht aus einer hartelastischen oder plastisch verformbaren Trägerstruktur 2, die beispielsweise aus einem Polypropylen (PP) oder einem PP-Compound durch Spritzgießen herstellbar ist. Die Armauflage kann über eine Rastverbindung 3 lösbar mit einer in Figur 2 angedeuteten Mittelkonsole 4 verbunden werden.

Wie aus Figur 1 ersichtlich, ist die Trägerstruktur 2 gitterartig ausgebildet, so dass sie zwar grundsätzlich eine für den Gebrauch ausreichende Festigkeit aufweist, jedoch bei einer unfallbedingten seitlichen Belastung, beispielsweise dem Aufprall eines neben der Mittelkonsole plazierten Sitzinsassen, elastisch oder plastisch verformbar ist. Die auf den Sitzinsassen wirkenden örtlichen Kräfte können durch diese Ausbildung gegenüber einer vollflächig geschlossenen Trägerstruktur erheblich reduziert werden.

Die bei der gitterartigen Ausbildung der Trägerstruktur entstehenden Ausnehmungen 5.1 sind, wie in Figur 2 gezeigt, mit einer membranartigen, weichelastischen Komponente 6.1 dichtend verschlossen. Es ist daher ohne weiteres Zutun möglich, die gedichtete Trägerstruktur 2 in ein Schäumwerkzeug einzulegen und auf der Auflageseite für den Arm des Sitzinsassen durch Anschäumen eines Schaumkissens 7, beispielsweise aus einem PUR-Schaum, komfortabel abzupolstern. Das Schaumkissen 7 wird auflageseitig mit einem Dekor 11, beispielsweise aus Leder, einer Kunststofffolie oder einem textilen Flächengebilde kaschiert.

Als Werkstoff für die weichelastische Komponente kommt beispielsweise ein polyolefinisches thermoplastisches Elastomer (TPE-O) mit einer Härte von 60 bis 80 Shore A in Betracht. Dieses Material läßt sich gut mit einer aus PP gefertigten Trägerstruktur verbinden, erhöht dessen Steifigkeit nur geringfügig und weist eine ausreichende Festigkeit auf, um dem Schäumdruck beim Anschäumen des Schaumkissens 7 zu widerstehen.

Gemeinsam mit der membranartigen weichelastischen Komponente 6.1 wird aus dem gleichen Werkstoff ferner ein die Trägerstruktur seitlich vollumfänglich umgebender Dichtwulst 8 angespritzt, der die Trägerstruktur 2 im Schäumwerkzeug abdichtet und einen Übertritt des Schaums verhindert. Selbstverständlich ist dabei Sorge zu tragen, dass die vom sich ausdehnenden Schaum aus der Kavität zu verdrängende Luft abgeführt werden kann.

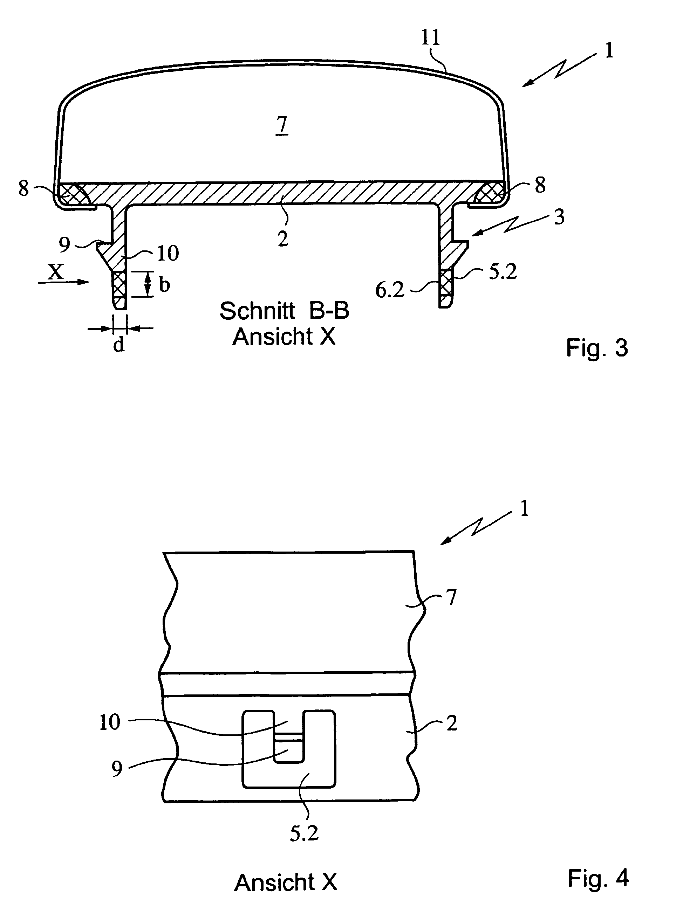

Wie aus Fig. 3 und 4 ersichtlich, ist die Trägerstruktur 2 weiterhin mit einer Anzahl U-förmiger Ausnehmungen 5.2 versehen, die im Bereich der Rastverbindungen 3 mit Rasthaken 9 versehene Rastzungen 10 ausbilden. Die Rastzungen 10 sind, obwohl einstückig mit der Trägerstruktur 2 verbunden, infolge ihrer geometrischen Ausbildung vergleichsweise biegeweich, so dass die Armauflage 1 mit geringem Kraftaufwand in der Mittelkonsole 4 verrastbar ist.

Aus optischen Gründen sind die Ausnehmungen 5.2 ebenfalls mit einer weichelastischen Komponente 6.2 verschlossen, die bevorzugt in einem Arbeitsgang mit den übrigen Weichanteilen aus dem gleichen Werkstoff angespritzt wird. Die Wanddicke d der weichelastischen Komponente ist dabei zur Reduzierung des Verformungswiderstands so bemessen, dass sie geringer ist als die Breite b der Ausnehmung 5.2. Im Ausführungsbeispiel beträgt die Wanddicke d etwa die Hälfte der Breite b, so dass die Flexibilität der Zunge 10 durch die Anbindung der weichelastischen Komponente nicht unzulässig herabgesetzt wird.

### Bezugszeichen

- 1: Armlehne
- 2: Trägerstruktur
- 3: Rastverbindung
- 4: Mittelkonsole
- 5: Ausnehmung
- 6: weichelastische Komponente
- 7: Schaumkissen
- 8: Dichtwulst
- 9: Rasthaken
- 10: Rastzunge
- 11: Dekor

## Patentansprüche

1. Ausstattungsteil für den Innenraum eines Kraftfahrzeugs, aus einer ersten, hartelastischen oder plastisch verformbaren Trägerstruktur (2) und einer mit dieser einstückig verbundenen zweiten, weichelastischen Komponente (6), welche die mit Ausnehmungen (5) versehene Trägerstruktur dichtend verschließt, **dadurch gekennzeichnet, dass** die Ausnehmungen (5) durch die weichelastische Komponente (6) im Wesentlichen ausgefüllt und damit dichtend verschlossen sind.

2. Ausstattungsteil nach Anspruch 1, **dadurch gekennzeichnet, dass** die hartelastische Trägerstruktur (2) bevorzugt U-förmige Ausnehmungen (5.2) aufweist, die in die Trägerstruktur eingeformte Rastzungen (10) ausbilden.

3. Ausstattungsteil nach Anspruch 2, **dadurch gekennzeichnet, dass** die örtliche Wanddicke (d) der die Ausnehmung (5.2) dichtend ausfüllenden weichelastischen Komponente (6) geringer, insbesondere höchstens halb so groß ist wie die örtliche Breite (b) der betreffenden Ausnehmung.

4. Ausstattungsteil nach einem der vorhergehenden Ansprüche, **dadurch gekennzeichnet, dass** die hartelastische oder plastisch verformbare Trägerstruktur (2) gitterartig ausgebildet ist, wobei die zwischen den Gitterelementen ausgebildeten flächigen Ausnehmungen (5.1) durch die weichelastische Komponente (6.1) im Wesentlichen ausgefüllt und damit dichtend verschlossen sind.

5. Ausstattungsteil nach einem der vorhergehenden Ansprüche, **gekennzeichnet durch** eine die hartelastische oder plastisch verformbare Trägerstruktur (2) und eine die Ausnehmungen (5.1) dichtende weichelastischen Komponente einseitig bedeckende Schaumlage, insbesondere in Form eines aus einem PUR-Schaum bestehenden Schaumkissens (7).

6. Ausstattungsteil nach Anspruch 5, **dadurch gekennzeichnet, dass** die Schaumlage bevorzugt vollumfänglich von einem einstückig an die Trägerstruktur (2) angeformten Dichtwulst (8) aus weichelastischem Werkstoff umgeben ist.

7. Ausstattungsteil nach Anspruch 5 oder 6, **dadurch gekennzeichnet, dass** der Schaum mit einem flächigem Dekor (11), insbesondere einer Kunststofffolie, einem textilen Flächengebilde oder einem Leder kaschiert ist.

8. Verfahren zur Herstellung eines Ausstattungsteil nach Anspruch 1, bei dem die mit Ausnehmungen (5) versehene hartelastische oder plastisch verformbare Trägerstruktur (2) bevorzugt durch Spritzgießen ausgeformt wird, **dadurch gekennzeichnet, dass** die Ausnehmungen (5) nachfolgend durch Einspritzen einer weichelastischen Komponente (6) dichtend ausgefüllt werden.

9. Verfahren nach Anspruch 8, **dadurch gekennzeichnet, dass** zeitgleich oder zeitversetzt ein bevorzugt umlaufender Dichtwulst (8) aus weichelastischem Werkstoff an die Trägerstruktur (2) angeformt wird.

10. Verfahren nach Anspruch 8 oder 9, **dadurch gekennzeichnet, dass** die Trägerstruktur (8) nachfolgend in ein Schäumwerkzeug eingelegt und zumindest einseitig mit einer Schaumlage, insbesondere einem Schaumkissen 7 versehen wird.

11. Verfahren nach Anspruch 10, **dadurch gekennzeichnet, dass** ein flächiges Dekor (11) in das Schäumwerkzeug eingelegt und nachfolgend die Schaumlage in den Raum zwischen Dekor und Trägerstruktur (2) eingebracht wird.

12. Verfahren nach Anspruch 10, **dadurch gekennzeichnet, dass** auf die Schaumlage nachfolgend ein flächiges Dekor (11) aufkaschiert, insbesondere aufgeklebt wird.

## Claims

1. Equipment part for the interior of a motor vehicle, consisting of a first, hard-elastic or plastically deformable carrier structure (2) and of a second, soft-elastic component (6) which is connected in one piece to the latter and which sealingly closes the carrier structure provided with recesses (5), **characterized in that** the recesses (5) are essentially filled by the soft-elastic component (6) and are consequently sealingly closed.

2. Equipment part according to Claim 1, **characterized in that** the hard-elastic carrier structure (2) preferably has U-shaped recesses (5.2) which form latching tongues (10) integrally formed into the carrier structure.

3. Equipment part according to Claim 2, **characterized in that** the local wall thickness (d) of the soft-elastic component (6) sealingly filling the recess (5.2) is smaller than, in particular at most half as large as, the local width (b) of the respective recess.

4. Equipment part according to one of the preceding claims, **characterized in that** the hard-elastic or plastically deformable carrier structure (2) is of grid-like design, the sheet-like recesses (5.1) formed between the grid elements being essentially filled by the soft-elastic component (6.1) and consequently being sealingly closed.

5. Equipment part according to one of the preceding claims, **characterized by** a foam layer, particularly in the form of a foam cushion (7) consisting of a PUR foam, which covers on one side the hard-elastic or plastically deformable carrier structure (2) and the soft-elastic component sealing the recesses (5.1).

6. Equipment part according to Claim 5, **characterized in that** the foam layer is preferably surrounded over the entire circumference by a sealing bead (8) consisting of soft-elastic material and integrally formed in one piece onto the carrier structure (2).

7. Equipment part according to Claim 5 or 6, **characterized in that** the foam is coated with a sheet-like decoration (11), in particular a plastic film, a sheet-like textile structure or a leather.

8. Method for producing an equipment part according to Claim 1, in which the hard-elastic or plastically deformable carrier structure (2) provided with recesses (5) is preferably formed by injection molding, **characterized in that** the recesses (5) are subsequently sealingly filled by the injection of a soft-elastic component (6).

9. Method according to Claim 8, **characterized in that**, at the same time or offset in time, a preferably peripheral sealing bead (8) consisting of soft-elastic material is integrally formed onto the carrier structure (2).

10. Method according to Claim 8 or 9, **characterized in that** the carrier structure (8) is subsequently introduced into a foaming die and is provided at least on one side with a foam layer, in particular a foam cushion (7).

11. Method according to Claim 10, **characterized in that** a sheet-like decoration (11) is introduced into the foaming die and the foam layer is subsequently introduced into the space between the decoration and the carrier structure (2).

12. Method according to Claim 10, **characterized in that** a sheet-like decoration (11) is subsequently coated, in particular glued, onto the foam layer.

## Revendications

1. Pièce d'équipement pour l'habitacle d'un véhicule automobile, constitué d'une première structure de support (2) élastique dure ou déformable plastiquement et d'un deuxième composant élastique mou (6) connecté d'une seule pièce à celle-ci, qui ferme hermétiquement la structure de support pourvue d'évidements (5), **caractérisée en ce que** les évidements (5) sont essentiellement remplis et donc fermés hermétiquement par le composant élastique mou (6).

2. Pièce d'équipement selon la revendication 1, **caractérisée en ce que** la structure de support élastique dure (2) présente de préférence des évidements en forme de U (5.2) qui constituent des langues d'encliquetage (10) formées dans la structure de support.

3. Pièce d'équipement selon la revendication 2, **caractérisée en ce que** l'épaisseur de paroi locale (d) du composant élastique mou (6) remplissant hermétiquement l'évidement (5.2) est plus petite, notamment au maximum deux fois plus petite, que la largeur locale (b) de l'évidement concerné.

4. Pièce d'équipement selon l'une quelconque des revendications précédentes, **caractérisée en ce que** la structure de support élastique dure ou déformable plastiquement (2) est réalisée en forme de grille, les évidements (5.1) plats réalisés entre les éléments de grille étant essentiellement remplis et donc fermés hermétiquement par le composant élastique mou (6.1).

5. Pièce d'équipement selon l'une quelconque des revendications précédentes, **caractérisée par** une structure de support élastique dure ou déformable plastiquement (2) et une couche de mousse recouvrant d'un côté le composant élastique mou fermant hermétiquement les évidements (5.1), notamment sous la forme d'un coussin de mousse (7) constitué d'une mousse de PUR.

6. Pièce d'équipement selon la revendication 5, **caractérisée en ce que** la couche de mousse est de préférence entourée sur toute sa périphérie par un bourrelet d'étanchéité (8) en matériau élastique mou façonné d'une seule pièce sur la structure de support (2).

7. Pièce d'équipement selon la revendication 5 ou 6, **caractérisée en ce que** la mousse est contrecollée avec une garniture décorative plate (11), notamment un film en plastique, une structure en nappe textile ou un cuir.

8. Procédé de fabrication d'une pièce d'équipement selon la revendication 1, dans lequel la structure de support (2) élastique dure ou déformable plastiquement pourvue d'évidements (5) est de préférence formée par moulage par injection, **caractérisé en ce que** les évidements (5) sont ensuite remplis de manière hermétique par injection d'un composant élastique mou (6).

9. Procédé selon la revendication 8, **caractérisé en ce qu'**un bourrelet d'étanchéité (8) de préférence périphérique en matériau élastique mou est façonné sur la structure de support (2).

10. Procédé selon la revendication 8 ou 9, **caractérisé en ce que** la structure de support (8) est ensuite introduite dans un outil de moussage, et est pourvue au moins d'un côté d'une couche de mousse, notamment d'un coussin de mousse (7).

11. Procédé selon la revendication 10, **caractérisé en ce qu'**une garniture décorative plate (11) est introduite dans l'outil de moussage et ensuite la couche de mousse est appliquée dans l'espace entre la garniture décorative et la structure de support (2).

12. Procédé selon la revendication 10, **caractérisé en ce que** l'on contrecolle, notamment **en ce que** l'on colle ensuite sur la couche de mousse une garniture décorative plate (11).
